# EUROPEAN PATENT APPLICATION

(11) **EP 3 421 634 A1**
(43) Date of publication of application: **02.01.2019**
(21) Application number: 18178558.5
(22) Date of filing: 22.02.2008
(51) Int. Cl.: C22C 38/02, C22C 38/04, C22C 38/06, C22C 38/08, C23C 2/06, C21D 9/46, B32B 15/01, C22C 18/00, C22C 18/02, C22C 38/38

(54) **COLD ROLLED AND CONTINUOUSLY ANNEALED HIGH STRENGTH STEEL STRIP AND METHOD FOR PRODUCING SAID STEEL**

(30) Priority: 23.02.2007 EP 07003811; 02.03.2007 EP 07004331
(62) Divisional of application: 08717056.9
(71) Applicant: Tata Steel IJmuiden B.V., 1951 JZ Velsen-Noord (NL)
(72) Inventor: HANLON, David Neal, 1970 CA IJmuiden (NL); VLOT, Margot Julia, 1970 CA IJmuiden (NL)
(74) Representative: Kruit, Jan

(57) **Abstract**

Cold rolled and continuously annealed high strength steel strip comprising (in wt%):
0.04-0.30 %C
1.0-3.5 %Mn
0-1.0 %Si
0-2.0 %Al
0-1.0 %Cr
0-0.02 %P
0-0.01 %S
0-0.25 %V
0-0.1 %Nb
0-0.20 %Ti
0-0.015 %N
0-0.010 %B
unavoidable impurities
balance iron,
provided with a hot dip galvanized or galvannealed zinc alloy coating layer, wherein the zinc alloy consists of 0.3 - 4.0 %Mg and 0.05 - 6.0 % Al; optionally at most 0.2 % of one or more additional elements; unavoidable impurities; the remainder being zinc, and method for producing it.

## Description

This invention relates to cold rolled and continuously annealed high strength steel strip provided with a zinc alloy coating layer and to a method for producing it.

High strength steels are increasingly being used in automotive and building applications as a result of the drive towards weight reduction. To compensate for the resulting decreasing thickness of the materials used in constructing the vehicles, materials having a higher strength are considered. However, the higher strength usually comes at a cost with regard to formability. As a result, many high strength steels having good formability are currently being looked at. These steel developments usually result in steels having a very specific combination of microstructure and chemical composition, and are produced in carefully designed and controlled production processes.

By using thinner steels having a higher strength requires the steel to be adequately protected against corrosion. This protection may be achieved by providing the steel with a metallic coating. To provide a steel strip with a zinc coating is well known, particularly for automotive and building applications. To obtain a thin layer of zinc on a steel strip in an economic way, it is normal practice to coat the steel strip by hot dip galvanizing, in which the strip is moved through a bath of molten zinc. The molten zinc adheres to the steel, and at the departure of the strip from the bath in most cases the surplus of zinc is removed from the strip to get a thin coating layer, usually using gas knives. It is known in the art to add certain chemical elements to the bath to improve the quality of the zinc coating and/or to improve the process of coating the steel strip. As elements often aluminium and magnesium are chosen.

These carefully tuned combinations cause the production of high strength steels to be prone to significant fluctuations in mechanical properties as a result of fluctuations of the mictrostructure. It is therefore an object of this invention to provide a method for producing a high strength steel having consistent mechanical properties which is less sensitive to process fluctuations. Also a problem with galvanising high strength steels is that these steels show a poor wettability for zinc coating layers as a result of the higher amount of alloying elements used in the steel. In contrast to the thermodynamic equilibrium nature of wetting between inert interfaces (such as water on gold) the covering of steel surfaces with a liquid Zn-coating by hot-dipping is a complex reactive wetting process. However, alloying elements with a high affinity to oxygen such as Mn, Al, Si etc. are known to lead to an enrichment of oxides on the steel surface during the annealing process. The wettability of such oxides with liquid zinc is generally known to be very poor. It is an object of this invention to provide a zinc coating layer providing full wettability of the high strength steel substrate despite the high level of alloying elements in the steel that are unfavourable for achieving full wettability.

The object according to the invention is reached by a cold rolled and continuously annealed high strength steel strip comprising (all percentages in wt% unless otherwise indicated):
0.04-0.30 %C
1.0-3.5 %Mn
0-1.0 %Si
0-2.0 %Al
0-1.0 %Cr
0-0.02 %P
0-0.01 %S
0-0.25 %V
0-0.1 %Nb
0-0.20 %Ti
0-0.015 %N
0-0.010 %B
unavoidable impurities
balance iron,
provided with a hot dip galvanized zinc alloy coating layer, wherein the zinc alloy coating layer consists of 0.3 - 4.0 %Mg and 0.05% - 6.0 % Al and optionally at most 0.2 % of one or more additional elements along with unavoidable impurities and the remainder being zinc.

An additional element that could be added in a small amount, less than 0.2 weight %, could be Pb or Sb, Ti, Ca, Mn, Sn, La, Ce, Cr, Ni, Zr or Bi. Pb, Sn, Bi and Sb are usually added to form spangles. Preferably, the total amount of additional elements in the zinc alloy is at most 0.2%. These small amounts of an additional element do not alter the properties of the coating nor the bath to any significant extent for the usual applications. Preferably, when one or more additional elements are present in the zinc alloy coating, each is present in an amount < 0.02 weight %, preferably each is present in an amount < 0.01 weight %. This is because additional elements do not change the corrosion resistance to a significant extent as compared to the addition of magnesium and aluminium, and additional elements make the coated steel strip more costly. Additional elements are usually only added to prevent dross forming in the bath with molten zinc alloy for the hot dip galvanising, or to form spangles in the coating layer. The additional elements are thus kept as low as possible. The thickness of the zinc alloy coating layer is preferably between 3 and 12 µm because thicker coatings are not necessary for most applications. The zinc alloy coating layer according to the invention improves the protection against corrosion that a thickness of at most 12 µm is sufficient for almost all applications. A thin coating layer is also beneficial for welding together two sheets of steel with the coating layer according to the invention, for instance by laser welding. In a preferred embodiment, the zinc alloy coating layer has a thickness of 3 - 10 µm, this being a preferred thickness range for automotive applications. According to a further preferred embodiment, the zinc alloy coating layer has a thickness of 3 - 8 µm or even 7 µm. This thickness is preferred when improved laser welds which are produced without a spacer are of importance.

The inventors have found that the steel according to the invention provides an excellent substrate wettability for the zinc alloy coating layer according to the invention, despite the high levels of alloying elements which are known to adversely affect the wettability of the steel substrate. It is important to note that the steel according to the invention does not contain Nickel as an alloying element, because Nickel forms a compound with Mg: MgNi₂ and Mg₂Ni. If the Nickel from the steel forms these compounds with the Mg from the plating bath, undesirable dross formation occurs in combination with an undesirable Mg-depletion of the plating bath. So for processing reasons, a nickel-containing substrate is undesirable.

Preferably, the microstructure comprises between 90 and 65% of ferrite, preferably between 85 and 70%, more preferably between 80 to 75%. The austenite fraction, present prior to the cooling immediately after inter-critical annealing OAT is preferably completely transformed to non-ferrite microstructural components, preferably bainite, martensite, acicular ferrite or is partly preserved as retained austenite. In an embodiment the steel strip comprises between 90 and 65% of ferrite, the remainder of the structure being acicular ferrite, bainite, martensite or retained austenite. Preferably the microstructure does not contain pearlite, although iron-carbide precipitates, such as cementite not in the form of lamellae in pearlite, may be present in the steel. Thus, a combination of steel substrate having the desired mechanical properties with excellent corrosion protection is obtained. The aluminium content is limited to 6% so as not to impair weldability. Mg-containing zinc layers are generally believed to be harder than non-Mg-containing zinc layers. Despite the fact that this generally means that the layers are more brittle, the inventors found that the adhesion of the zinc alloy coating layer was so much better that even during the high contact pressure during shaping the zinc alloy coating layer does not succumb to the pressure and remains in place to protect the product against corrosion during and after shaping. The higher contact pressures during forming of high strength steel components in a forming operation do not lead to damage of the coating such as often happens with a galveannealed coating layer, and it does not scrape off as easily as a normal galvanised zinc layer does. This may be because Mg additions are believed to be beneficial in promoting lubrication between the coated steel and (hot) shaping tools. The inventors believe that the Mg-oxide forming on the zinc-bath protects against evaporation of the zinc during coating. Reduced zinc evaporation is also beneficial in the snout area during hot dip galvanising. The snout is the location where the strip enters the zinc bath. Normally, zinc evaporates and forms dust at colder areas (zinc and zinc oxide) that may fall on the strip and zinc bath surface in the snout. This can lead to defects in the zinc coating. Mg oxide on the bath surface limits the evaporation of zinc in this area and so the decreases the chance on defects in the zinc coating.

Due to the formation of Fe₂Al₅, the coating layer always contains some iron, even though the bath from which the coating layer was deposited does not contain iron as an additional element as defined above. The iron constitutes an unavoidable impurity because of the fact that a steel substrate is used. The iron is not an additional element and should preferably not exceed 1.5% or more preferably 1.0%. In an embodiment of the invention the iron content in the coating layer is limited to below 0.6%, preferably to below 0.4%. Even more preferably the amount is limited to below 0.2%.

In an embodiment of the invention, the steel substrate consists only of the alloying elements that are expressly claimed. Other elements, such as oxygen or rare earth elements, may only be present as unavoidable impurities, and the balance is iron.

The minimum level of aluminium of 0.05% can be used, as it is not important to prevent all reactions between Fe and Zn. Without any aluminium, thick solid Fe-Zn alloys grow on the steel surface and the coating thickness cannot be regulated smoothly by wiping with a gas. An aluminium content of 0.05% is enough to prevent problematic Fe-Zn alloy formation. Preferably, the aluminium content is at least 0.3%. Lastly, the phosphatability of the steel is improved as a result of the addition of Mg.

In an embodiment of the invention the zinc alloy comprises 0.3 - 2.3 weight % magnesium and 0.6 - 2.3 weight % aluminium. By limiting the magnesium level to at most 2.3% the formation of oxidic dross on the zinc bath is reduced whilst retaining the corrosion protection at a sufficiently high level. By limiting the aluminium content, the weldability is improved. In a preferred embodiment, the silicon content in the zinc alloy layer is below 0.0010 weight %.

According to a preferred embodiment, the steel strip has been provided with a zinc alloy coating layer in which the zinc alloy contains 1.6 - 2.3 weight % magnesium and 1.6 - 2.3 weight % aluminium. This is a preferred embodiment, because at these values the corrosion protection of the coating is at a maximum, and the corrosion protection is not influenced by small compositional variations. Above 2.3 weight % magnesium and aluminium, the coating may become brittle and the surface quality of the coating may decrease.

In an embodiment of the invention the steel strip has been provided with a zinc alloy coating layer in which the zinc alloy contains 0.6 - 1.3 weight % aluminium and/or 0.3 - 1.3 weight % magnesium. With these smaller amounts of aluminium and magnesium, no major modifications of the conventional hot dip galvanising bath and apparatus are needed, whereas magnesium at levels between 0.3 and 1.3 weight % improves the corrosion resistance considerably. Usually, for these amounts of magnesium more than 0.5 weight % of aluminium has to be added to prevent that more oxidic dross is formed on the bath than for conventional baths; dross can lead to defects in the coating. The coatings with these amounts of magnesium and aluminium are optimal for applications with high demands on surface quality and improved corrosion resistance.

Preferably, the zinc alloy contains 0.8 - 1.2 weight % aluminium and/or 0.8 - 1.2 weight % magnesium. These amounts of magnesium and aluminium are optimal to provide a coating with both a high corrosion resistance, an excellent surface quality, an excellent formability, and a good weldability at limited extra costs as compared to conventional hot dipped galvanising.

According to a preferred embodiment, the steel strip has been provided with a hot dip galvanized zinc alloy coating layer in which the amount of aluminium in weight % is the same as the amount of magnesium in weight % plus or minus a maximum of 0.3 weight %. It has been found that the dross formed on the bath is suppressed to a considerable level when the amount of aluminium equals or almost equals the amount of magnesium.

In an embodiment of the invention the steel strip coated with a zinc alloy coating according to the invention comprises 0.07-0.16 %C, 1.4-2.0 %Mn, preferably 1.5-1.8 %Mn, 0.2-0.4 %Si, preferably at least 0.25% Si, 0.5-1.5 %AI, 0.4-0.8 %Cr, 0-0.05 %Ti, 0-0.03 %Nb, 0-0.01 %N, 0-0.002 %B and V as impurity.

In a preferable embodiment, boron is not added as an alloying element but, if present, is present only as an impurity. Boron is known to affect hardenability considerably, thereby stimulating martensite formation at the expense of retained austenite, and thereby impairing formability of the steel. The microstructure of the steel according to this embodiment is pearlite free and comprises ferrite, bainite, martensite and retained austenite. Preferably, the volume fraction of retained austenite is between 1 and 10%, preferably about 5%. The bainite is preferably carbide free. These steels provide a good tensile strength in combination with a high ductility and excellent corrosion resistance and weldability.

In a preferred embodiment of the invention the steel strip comprises 0.07-0.12 %C and 0.5-1.0 %AI. The tensile strength of the steel according to this embodiment is somewhat lower, and is about 600 MPa. The reduction in alloying elements means that the annealing treatment after cold rolling has to be adapted in order to still obtain a pearlite free microstructure comprising ferrite, bainite, martensite and retained austenite.

In an embodiment of the invention a steel strip provided with a zinc alloy coating layer according to the invention comprises 0.07-0.20 %C, 1.2-3.5 %Mn, 0-1.5 %AI, 0-0.15 %Ti, 0-0.002 %B.

In a preferable embodiment, boron is not added as an alloying element but, if present, is present only as an impurity. The microstructure of the steel according to this embodiment is pearlite free and comprises ferrite, martensite and carbides. Preferably, the volume fraction of ferrite is between 70 and 95%, preferably about 80%. The application of the zinc alloy coating layer provides a high strength steel with good ductility. Preferably the steel strip comprises 0.07-0.17 %C, 1.2-2.5 %Mn and 0-1.0 %AI. More preferably the steel strip comprises 0.07-0.12 %C, 1.2-2.0 %Mn, 0-0.4 %Si, 0-1.0 %AI, 0-0.05 %Ti, 0-0.07 %Nb, 0-0.01 %N. Both preferred embodiments provide a somewhat lower tensile strength in combination with a higher ductility and excellent corrosion resistance and weldability.

In an embodiment of the invention the steel strip coated with a zinc alloy coating according to the invention comprises 0.15-0.30 %C, 1.5-3.5 %Mn, 0.5-2.0 %AI, 0-0.05 %Nb, 0-0.01 %N, 0-0.002 %B. In a preferable embodiment, boron is not added as an alloying element but, if present, is present only as an impurity. The microstructure of the steel according to this embodiment is pearlite free and comprises ferrite, bainite, martensite and retained austenite. This steel is sometimes referred to as a TRIP-steel. Preferably, the volume fraction of retained austenite is between 1 and 10%, preferably about 5%. The bainite is preferably carbide free. The application of the zinc alloy coating layer provides a high strength steel with good ductility and excellent corrosion resistance and weldability. In an embodiment the steel strip comprises 0.15-0.24 %C, 1.5-2.0 %Mn, 0.2-0.8 %Si, preferably 0.2-0.6% Si, preferably at least 0.25% Si, 0.5-1.5 %AI, 0-0.05 %Nb, preferably max. 0.03%. In a preferred embodiment the steel strip comprises 0.15-0.20 %C.

According to a second aspect of the invention a method for producing a cold rolled and continuously annealed high strength steel strip is provided comprising the subsequent steps of:
- providing a cold-rolled steel strip comprising:
   0.04-0.30 %C
   1.0-3.5 %Mn
   0-1.0 %Si
   0-2.0 %Al
   0-1.0 %Cr
   0-0.02 %P
   0-0.01 %S
   0-0.25 %V
   0-0.1 %Nb
   0-0.20 %Ti
   0-0.015 %N
   0-0.010 %B
   unavoidable impurities
   balance iron
- heating the strip to an intercritical annealing temperature IAT
- holding the strip at the IAT for an annealing time sufficient to attain the desired ratio of ferrite to austenite
- cooling the strip to an over-aging temperature OAT
- holding the strip at the OAT for an over-aging time
- heating the strip to a galvanising temperature GT
- coating the strip by dipping the strip into a molten bath having a zinc bath temperature ZBT containing the zinc alloy for the zinc alloy coating layer to be coated onto the steel strip
- cooling the strip.

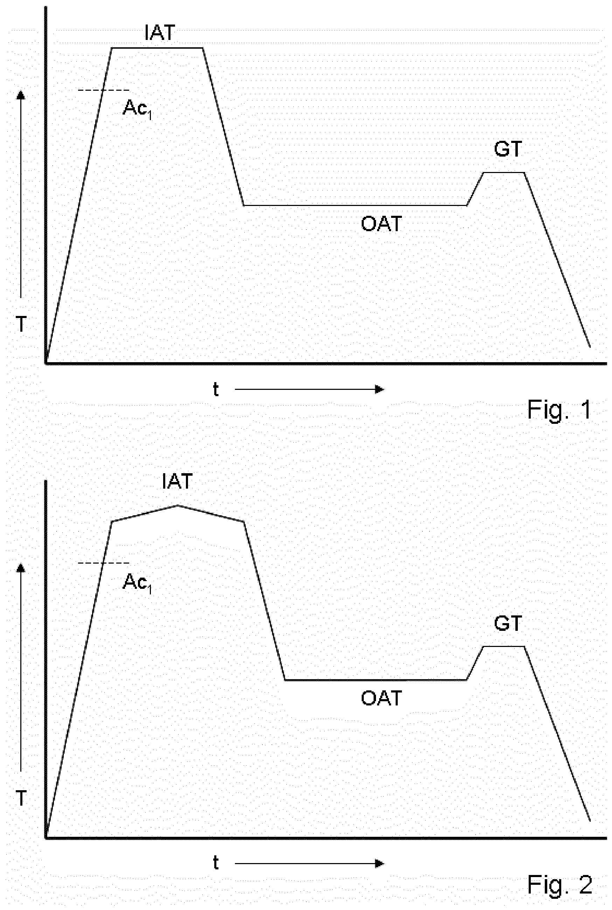

During the heating of the strip to the IAT the substantially ferritic steel matrix transforms partly to austenite, depending on the IAT and the annealing time at the IAT. For the sake of simplicity, the IAT can be chosen constant as schematically depicted in Fig. 1, although it is also possible to heat the strip quickly to a temperature somewhat below IAT followed by a slow heat to a peak IAT and followed by a slow cool to a temperature again somewhat below IAT so as to attain the desired ratio of ferrite to austenite at the end of the annealing treatment at the IAT as schematically depicted in Fig. 2. Preferably the volume fraction of austenite content prior to the cooling to the OAT is at most 50%. However, so as to retain sufficient hardenability the volume fraction is preferably between 10 and 35%, preferably between 15 to 30%, preferably between 20 to 25%. In an embodiment of the invention the AIT is between 750 and 850°C, preferably between 780 and 830°C.

In an embodiment of the invention, the steel substrate consists only of the alloying elements that are expressly claimed. Other elements, such as oxygen or rare earth elements, may only be present as unavoidable impurities, and the balance is iron.

In an embodiment the heating step to the IAT is performed quickly to a temperature above Ac1 with an overheating of between Ac1+20 and Ac1+80 so as to effect a fast nucleation of austenite. The inventors found that this fast heating step, which in most annealing devices coincides with the heating in a direct fired furnace (DFF), and therefore the fast heating step ends at the exit of the DFF, results in an increase of strength with maintenance or even improvement in ductility via a refinement of microstructure and promotion of band free structures. This effect of the fast heating combined with the overheating above Ac1 has been found for all embodiments of the invention. The improvement in ultimate tensile strength ranges from 30 to 120 MPa depending on chemistry. Preferably the heating rate is between 10 and 50°C/s, more preferably between 15 and 40°C. A suitable value for the heating rate was found to be between 15 and 25°C/s, for example about 20°C/s. After the fast heating the remainder of the heating to the IAT may be performed at a slower heating rate (as in figure 2), or the IAT may already have been reached by the fast heating rate (as in figure 1).

In an embodiment the over-aging temperature OAT is at most 150 °C lower than the GT, preferably at most 100 °C lower than the GT, more preferably at most 70 °C lower than the GT, even more preferably at most 50 °C lower than the GT. By allowing the OAT to be lower than the GT, the process can be tailored to achieve the desired microstructure after the cooling from the IAT and the over-aging treatment at the OAT independently from the subsequent hot dip coating. It was found that overageing at a temperature below the GT provides a very good combination of strength and ductility. On the other hand, the hot dip treatment can be optimised so as to achieve the best corrosion protection, coating coverage and coating adhesion.

In an embodiment of the invention the OAT is at least 10 °C lower than the GT, preferably at least 20 °C lower, more preferably at least 30°C lower than the GT. In an embodiment of the invention the temperature increase from the OAT to the GT is achieved by an induction heating step. Induction heating is a fast and clean heating process, so as not to contaminate the surface of the steel strip to be hot dip coated and a very short heating section is sufficient. There is no limit to the heating step that can be achieved to heat the steel strip from the OAT to the GT, but the inventors found that a temperature difference of between 10 and 75 °C between OAT and GT can be economically bridged by inductive heating.

In an embodiment the zinc-bath temperature ZBT is at most 25°C lower than the GT, preferably at most 20°C, more preferably at most 15°C, even more preferably at most 10°C. Preferably the temperature GT of the steel strip before entering the bath of molten zinc alloy is between 380° C and 850° C, more preferably between the temperature of the bath of molten zinc alloy and 25° C above the bath temperature. The temperature of the steel strip should not be lower than the melting point of the zinc alloy to avoid local solidification of the zinc bath. High steel strip temperatures will lead to higher evaporation of the zinc, resulting in dust formation. High steel strip temperatures can also heat up the zinc bath, requiring continuous cooling of the zinc in the bath, which is expensive. For these reasons a temperature of the steel strip just above the bath temperature is preferred.

In an embodiment the OAT is between 350 and 450°C, preferably between 380 and 430 °C. It was found that an OAT within these temperature boundaries provides an optimal microstructure for achieving high strength and ductility.

In an embodiment the ZBT is between 430 and 490°C, preferably between 440 and 480, more preferably between 450 and 470 °C. According to a preferred embodiment of the process, the temperature of the bath of molten zinc ZBT is kept between 380° C and 550° C, preferably between 430° C and 490° C. A lower limit of 440° C is absolutely safe to avoid any solidification. Increasing the zinc bath temperature increases the zinc evaporation and leads to dust formation in the galvanising line, giving rise to surface defects. The upper limit should thus be reasonably low, for which 550° C is fair, and preferably 480° C as a technically possible upper limit.

In a preferred embodiment a method for producing a cold rolled and continuously annealed high strength steel strip according to the process described hereinabove is provided wherein the steel strip comprises, preferably consists of, in wt%:
0.04-0.16 %C, preferably 0.08-0.12 %C
1.4-2.0 %Mn, preferably 1.5-1.8% Mn
0.2-0.4 %Si, preferably at least 0.25%
0.5-1.5 %Al
0.4-0.8 %Cr
0-0.05 %Ti
0-0.03 %Nb
0-0.01 %N
0-0.002 %B, preferably boron as impurity
V as impurity
unavoidable impurities
balance iron

In a preferable embodiment, boron is not added as an alloying element but, if present, is present only as an impurity. This combination of steel substrate composition, annealing treatment, hot dip coating treatment and the ability to control the microstructure independently from the hot dip coating treatment provides a high strength steel strip of excellent strength, consistency and ductility, whereas the coating treatment can be performed independently from the over-ageing treatment so as to obtain the best quality of the coating. This is a big advantage because normally the microstructure components and hence the mechanical properties which are produced in the initial stages of the annealing process are adversely affected in the later stage of the galvanizing treatment. The heating of the strip between the overageing and the hot dip coating is prefereably obtained by induction heating. In a preferred embodiment the steel strip comprises 0.04-0.12 %C, or even 0.8 to 0.12 %C. The inventors found that when the OAT is selected between 380 and 430 °C for an over-aging time of between 40 seconds and 150 seconds, preferably between 60 and 100 seconds, more preferably between 70 and 90 seconds a very good combination of strength and ductility for this particular composition was achieved, particularly for steels having an aluminium content between 0.3 and 0.7%. When the aluminium content of the steel is about 1%, an annealing time of 120 seconds at an OAT between 400 and 420 provided good results.

In order to further improve the quality of the zinc alloy coating a galvannealing step after the zinc alloy coating step and prior to the cooling step to ambient temperature can be used. A galvannealing step may comprise the heating of the strip for instance for 20 to 40 seconds at 470 to 550°C, immediately following the hot dipping so as to achieve an iron content in the zinc alloy coating of up to 15%, preferably between 7 and 13%, for instance about 10%.

In an embodiment the zinc alloy consists of 0.3 - 4.0 %Mg and 0.3 - 6.0 % Al; optionally at most 0.2 % of one or more additional elements; unavoidable impurities; the remainder being zinc. Preferably the zinc alloy consists of: 0.3 - 2.3 weight % magnesium; 0.5 - 2.3 weight % aluminium; optional < 0.2 weight % of one or more additional elements; unavoidable impurities; the remainder being zinc. Preferably the zinc alloy comprises less than 0.0010 weight % of silicon.

In an embodiment the zinc alloy bath contains 1.5 - 2.3 weight % magnesium and 1.5 - 2.3 weight % aluminium. Preferably the zinc alloy bath contains 0.6 - 1.3 weight % aluminium, and preferably contains 0.7 - 1.2 weight % aluminium and/or the zinc alloy bath contains 0.3 - 1.3 weight % magnesium, and preferably contains 0.7 - 1.2 weight % magnesium. Industrial tests were performed with various steel substrates having compositions in accordance with the invention. The zinc alloy coating layers comprised substantially equal aluminium and magnesium contents ranging between 1.5 and 2% each. The adhesion was found to be excellent and independent of the composition of the steel substrate, despite the use of significant amount of alloying elements.

## Claims

1. Cold rolled and continuously annealed high strength steel strip comprising (in wt%):
0.04-0.30 %C
1.0-3.5 %Mn
0-1.0 %Si
0-2.0 %Al
0-1.0 %Cr
0-0.02 %P
0-0.01 %S
0-0.25 %V
0-0.1 %Nb
0-0.20 %Ti
0-0.015 %N
0-0.010 %B
unavoidable impurities
balance iron,
provided with a hot dip galvanized or galvannealed zinc alloy coating layer, wherein the zinc alloy consists of 0.3 - 4.0 %Mg and 0.05 - 6.0 % Al; optionally at most 0.2 % of one or more additional elements; unavoidable impurities; the remainder being zinc.

2. Steel strip provided with a zinc alloy coating layer according to claim 1, in which the zinc alloy comprises 0.3 - 2.3 weight % magnesium and 0.6 - 2.3 weight % aluminium, preferably wherein the zinc alloy contains 1.6 - 2.3 weight % magnesium and 1.6 - 2.3 weight % aluminium.

3. Steel strip provided with a zinc alloy coating layer according to any one of the preceding claims wherein the steel strip comprises between 90 and 65% of ferrite, the remainder of the structure being acicular ferrite, bainite, martensite or retained austenite.

4. Steel strip provided with a zinc alloy coating layer according to any one of the preceding claims wherein the steel strip consists of:
0.04-0.30 %C
1.0-3.5 %Mn
0-1.0 %Si
0-2.0 %Al
0-1.0 %Cr
0-0.02 %P
0-0.01 %S
0-0.25 %V
0-0.1 %Nb
0-0.20 %Ti
0-0.015 %N
0-0.010 %B
unavoidable impurities
balance iron.

5. Steel strip provided with a zinc alloy coating layer according to any one of the preceding claims wherein the steel strip comprises:
0.07-0.16 %C, preferably 0.08-0.12 %C,
1.4-2.0 %Mn, preferably 1.5-1.8 %Mn,
0.2-0.4 %Si, preferably at least 0.25%,
0.5-1.5 %AI, preferably 0.5-1.0 %AI,
0.4-0.8 %Cr
0-0.05 %Ti
0-0.03 %Nb
0-0.01 %N
0-0.002 %B
V as impurity
unavoidable impurities
balance iron.

6. Steel strip provided with a zinc alloy coating layer according to claim 1, 2, 3 or 4 wherein the steel strip comprises:
0.07-0.20 %C, preferably 0.07-0.17 %C
1.2-3.5 %Mn, preferably 1.2-2.5 %Mn
0-1.5 %AI, preferably 0-1.0 %Al
0-0.15 %Ti
0-0.002 %B

7. Steel strip provided with a zinc alloy coating layer according to claim 6 wherein the steel strip comprises:
0.07-0.12 %C
1.2-2.0 %Mn
0-0.4 %Si
0-1.0 %Al
0-0.05 %Ti
0-0.07 %Nb
0-0.01 %N
0-0.002 %B

8. Steel strip provided with a zinc alloy coating layer according to claim 1, 2, 3 or 4 wherein the steel strip comprises:
0.15-0.30 %C, preferably 0.15-0.24 %C
1.5-3.5 %Mn, preferably 1.5-2.0 %Mn
0.5-2.0 %AI, preferably 0.5-1.5 %Al
0-0.05 %Nb
0-0.01 %N
0-0.002 %B,
unavoidable impurities
balance iron

9. Steel strip provided with a hot dip galvanized zinc alloy coating layer according to claim 8 wherein the steel strip comprises:
0.15-0.20 %C
1.5-2.0 %Mn
0.2-0.6 %Si
0.5-1.5 %Al
0-0.05 %Nb

10. Method for producing a cold rolled and continuously annealed high strength steel strip comprising the subsequent steps of:
- providing a cold-rolled steel strip comprising:
0.04-0.30 %C
1.0-3.5 %Mn
0-1.0 %Si
0-2.0 %Al
0-1.0 %Cr
0-0.02 %P
0-0.01 %S
0-0.25 %V
0-0.1 %Nb
0-0.20 %Ti
0-0.015 %N
0-0.010 %B
unavoidable impurities
balance iron
- heating the strip to an intercritical annealing temperature IAT
- holding the strip at the IAT for an annealing time sufficient to attain the desired ratio of ferrite to austenite
- cooling the strip to an over-aging temperature OAT
- holding the strip at the OAT for an over-aging time
- heating the strip to a galvanising temperature GT
- coating the strip by dipping the strip into a molten bath having a zinc bath temperature ZBT containing the zinc alloy for the zinc alloy coating layer to be coated onto the steel strip
- cooling the strip.

11. Method according to claim 10 wherein the OAT is at most 150 °C lower than the GT and/or wherein the OAT is at least 10 °C lower than the GT.

12. Method according to any one of claims 10 or 11 wherein the temperature increase from the OAT to the GT is achieved by an induction heating step.

13. Method according to any one of claims 10 to 12 wherein the ZBT is at most 25°C lower than the GT.

14. Method according to any one of claims 10 to 13 wherein the OAT is between 350 and 450°C and/or wherein the ZBT is between 430 and 490°C and/or wherein the AIT is between 750 and 850°C, preferably between 780 and 830 °C.

15. Method for producing a cold rolled and continuously annealed high strength steel strip according to any one of claims 10 to 14 wherein the steel strip comprises, in wt%:
0.07-0.16 %C, preferably 0.08-0.12 %C
1.4-2.0 %Mn, preferably 1.5-1.8% Mn
0.2-0.4 %Si, preferably at least 0.25%
0.5-1.5 %Al
0.4-0.8 %Cr
0-0.05 %Ti
0-0.03 %Nb
0-0.01 %N
0-0.002 %B
V as impurity
unavoidable impurities
balance iron

16. Method according to claim 15 wherein the OAT is between 380 and 430 °C for an over-aging time of between 40 seconds and 150 seconds.

17. Method according to any one of claims 10 to 16 wherein the coated steel substrate is subjected to a galvannealing step after the coating step and prior to the cooling step.

18. Method according to any one of claims 10 to 17 wherein
- the zinc alloy consists of 0.3 - 4.0 %Mg and 0.05 - 6.0 % Al; optionally at most 0.2 % of one or more additional elements; unavoidable impurities; the remainder being zinc.

19. Process according to claim 18, in which
- the zinc alloy contains 1.5 - 2.3 weight % magnesium and 1.5 - 2.3 weight % aluminium or
